# EUROPÄISCHE PATENTSCHRIFT

(11) **EP 2 977 237 B1**
(45) Veröffentlichungstag und Bekanntmachung des Hinweises auf die Patenterteilung: **05.09.2018**
(21) Anmeldenummer: 15002181.4
(22) Anmeldetag: 23.07.2015
(51) Int. Cl.: B60D 1/04, B60D 1/24, B60D 1/46

(54) **ANHÄNGERKUPPLUNG FÜR EIN FAHRZEUG**
TRAILER COUPLING FOR A VEHICLE
ATTELAGE POUR VEHICULE

(30) Priorität: 25.07.2014 DE 202014005980 U
(43) Veröffentlichungstag der Anmeldung: 27.01.2016
(73) Patentinhaber: Sauermann, Franz, 86558 Hohenwart-Freinhausen (DE)
(72) Erfinder: Sauermann, Hans, 86558 Freinhausen (DE)
(74) Vertreter: TBK

(56) Entgegenhaltungen:
- EP-A1- 1 609 344
- DE-A1- 4 427 399

## Beschreibung

Die Erfindung betrifft eine Anhängerkupplung für ein Fahrzeug, wobei die Anhängerkupplung einen fahrzeugfesten Rahmen aufweist, an dem ein nach hinten gerichteter Schwenkarm angelenkt ist. In diesem Schwenkarm ist ein Kupplungsglied verschiebbar abgestützt. Auf diese Weise kann das Kupplungsglied auf den Boden abgesenkt und so weit nach hinten verschoben werden, dass das Kupplungsglied eine Anhängerdeichsel aufnimmt. Dieser Typ Anhängerkupplungen wird üblicherweise als "Hitch" bezeichnet.

Aus der EP 1 428 696 B1 ist eine gattungsgemäße Anhängerkupplung bekannt. Sie weist einen fahrzeugfesten Rahmen auf, an dem ein Schwenkarm zwischen einer abgesenkten Ankuppelstellung und einer angehobenen Transportstellung verschwenkbar gehalten ist. Dieser Schwenkarm weist Seitenwände auf, die eine Führung für einen Schiebeschlitten halten. An diesem Schiebeschlitten ist ein Kupplungsglied abgestützt. Im Schwenkarm ist außerdem ein Hydraulikzylinder vorgesehen, der die Verschiebung des Schiebeschlittens und damit das Kupplungsglied bewirkt. Diese Anhängerkupplung hat sich in der Praxis vielfach bewährt und bildet den Ausgangspunkt der vorliegenden Erfindung.

Aus dem Dokument DE 44 27 399 A1 ist eine Anhängerkupplung für einen Ackerschlepper bekannt, die einen fahrzeugfesten Rahmen aufweist, an dem ein nach hinten gerichteter Schwenkarm zwischen einer abgesenkten Ankuppelstellung und einer angehobenen Transportstellung verschwenkbar gehalten ist. Der Schwenkarm weist Seitenwände auf, an denen mindestens eine Führung abgestützt ist, in der ein Schiebeschlitten verschiebbar abgestützt ist, der ein Kupplungsglied trägt. Die Führung weist ein Hohlprofil mit Seiten- und Querstegen auf.

Das Dokument EP 1 609 344 A1 beschreibt eine Anhängerkupplung für einen Ackerschlepper, die einen fahrzeugfesten Rahmen aufweist, an dem ein nach hinten gerichteter Schwenkarm zwischen einer abgesenkten Ankuppelstellung und einer angehobenen Transportstellung verschwenkbar gehalten ist. Der Schwenkarm weist Seitenwände auf, an denen eine Führung abgestützt ist, in der ein Schiebeschlitten verschiebbar abgestützt ist, der ein Kupplungsglied trägt. Die Führung hat zwei U-förmige Profilkörper, die Seitenstege und einen diese verbindenden Quersteg aufweisen, wobei die Seitenstege mit den Seitenwänden des Schwenkarms verbunden sind.

Aufgabe der Erfindung ist es, eine Anhängerkupplung für ein Fahrzeug, insbesondere für einen Ackerschlepper, zu schaffen, die sich durch eine leichte Bauart insbesondere bezüglich der beweglichen Teile auszeichnet.

Die Aufgabe wird durch die Merkmale des Anspruchs 1 gelöst. Es wird ein U-förmiger Profilkörper unten angeordnet und der andere Profilkörper oben angeordnet, wobei der untere Profilkörper länger als der obere Profilkörper ist und die Seitenstege der Profilkörper stufenartig geformt sind. Dabei ist die Stufe mit einer Rundung versehen und der obere Profilkörper passend zu dem unteren Profilkörper ausgebildet. Dies ermöglicht eine Verschweißung in einem kerbunempfindlichen Bereich, womit hinsichtlich der bewegten Teile eine ausgesprochen leichte, aber dennoch stabile Konstruktion geschaffen wird. Durch diese Gestaltung kann die Schweißnaht in einen Bereich gelegt werden, der es erlaubt, auch bei relativ schwach dimensionierten Profilkörpern eine hinreichende Festigkeit zu erzielen.

Es hat sich herausgestellt, dass der Schwenkarm einer derartigen Anhängerkupplung sehr hohen Belastungen ausgesetzt ist und insbesondere dessen Seitenwände extrem massiv auszubilden sind. Da es sich hierbei um bewegliche Teile handelt, müssen diese mit angehoben werden, wodurch sich die Stellkräfte des Schwenkarms entsprechend erhöhen. Zur Lösung dieses Problems wird die Führung von mindestens zwei U-förmigen Profilkörpern gebildet, die jeweils Seitenstege und einen diese verbindenden Quersteg aufweisen. Dabei sind die Seitenstege mit den Seitenwänden des Schwenkarms verbunden. Auf diese Weise ergibt sich eine kraftschlüssige Verbindung der beiden Seitenwände des Schwenkarms über die Profilkörper. Über diese Verbindung werden Biegemomente abgefangen, die die Seitenwände auseinanderdrücken könnten. Aufgrund dieser Verbindung ist der Schwenkarm wesentlich formsteifer ausgebildet, so dass die Seitenwände des Schwenkarms entsprechend schwächer und damit leichter aufgebaut werden können.

Eine Ausbildung der Führung als einstückiges, formrohrartiges Bauteil wäre zwar in sich stabiler als die vorgeschlagene mehrschalige Führung, es könnte jedoch im Wesentlichen nur an den Ober- und Unterkanten mit den Seitenwänden des Schwenkarms verschweißt werden. In diesem Fall reißen die Schweißnähte zwischen der Führung und den Seitenwänden unter Belastung ab, was nur durch entsprechende Verstärkung der Seitenwände des Schwenkarms kompensiert werden könnte. Durch den vorgeschlagenen mehrschaligen Aufbau der Führung kann diese auch in einem mittleren Bereich des Schwenkarms mit diesem verbunden werden, was die Verbindung insgesamt wesentlich sicherer macht. Erst aufgrund dieser Maßnahme ist es möglich, die Seitenwände entsprechend schlanker auszubilden.

Zur Erzielung einer optimalen Stabilisierung des Schwenkarms ist es nicht zweckmäßig, die Führung weit in Richtung der Schwenkachse erstrecken zu lassen. Es hat sich herausgestellt, dass die von der Führung gebildete Brücke zwischen den Seitenwänden des Schwenkarms umso weniger stabilisierende Wirkung hat, je näher sich die Verbindung zwischen den Schwenkarmen an der Schwenkachse befindet. Der untere Profilkörper wird daher zweckmäßigerweise möglichst nahe an den freien Enden der Seitenwände des Schwenkarms vorgesehen, damit dieser eine optimale Stabilisierungswirkung hervorrufen kann. Beim oberen Profilkörper ist dies nicht so einfach möglich, da über dem Kupplungsglied ein gewisser Freiraum geschaffen werden muss, um den Ankuppelvorgang nicht zu behindern. Aus diesem Grund ist es zweckmäßig, wenn der untere Profilkörper länger als der obere Profilkörper ist. Damit werden unter den gegebenen Nebenbedingungen die stabilisierenden Wirkungen der Profilkörper optimiert.

Zur Vermeidung von Kerbwirkungen und insbesondere davon ausgehenden Rissen ist die Stufe gerundet ausgebildet.

Der Erfindungsgegenstand wird beispielhaft anhand der Zeichnung erläutert, ohne den Schutzumfang zu beschränken.

Es zeigt:
- Figur 1: eine räumliche Darstellung einer Anhängerkupplung,
- Figur 2: eine räumliche Darstellung eines Abschnitts des Schwenkarms und
- Figur 3: eine räumliche Darstellung einer Führung in nicht montierter Lage.

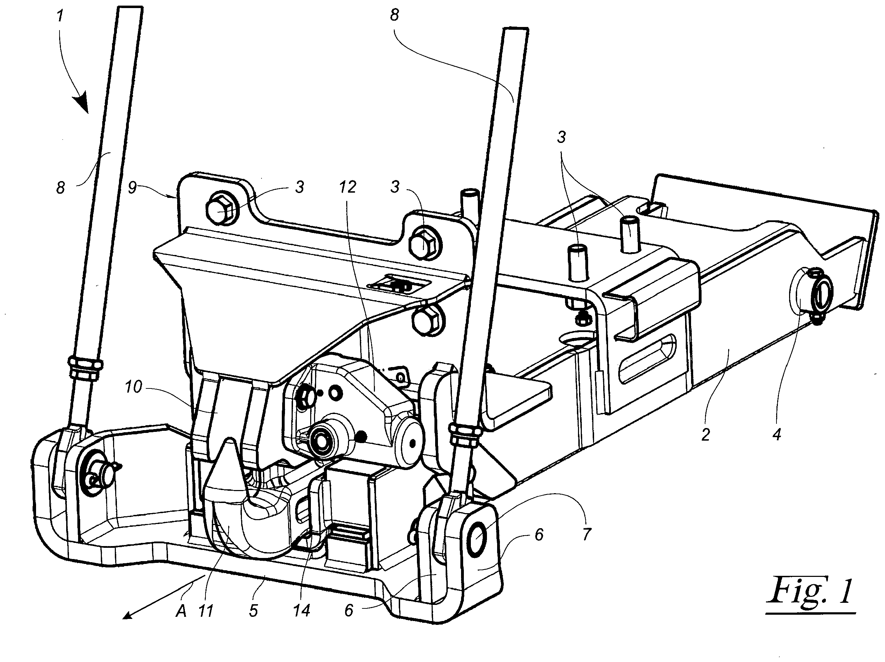

Eine Anhängerkupplung 1 gemäß Figur 1 weist einen fahrzeugfesten Rahmen 2 auf, der durch Haltemittel 3 an einem nicht dargestellten Fahrzeug bodenseitig und heckseitig befestigt ist. An diesem Rahmen 2 ist eine Gelenkachse 4 abgestützt, die einen Schwenkarm 5 trägt. Dieser Schwenkarm 5 ist von der dargestellten, angehobenen Transportstellung in eine nicht dargestellte, nach unten verschwenkte Ankuppelstellung verschwenkbar. Zu diesem Zweck weist der Schwenkarm 5 Flansche 6 auf, die von Zapfen 7 durchsetzt sind. An diesen Zapfen 7 greifen Hebemittel 8 an, die lediglich beispielhaft als Hydraulikzylinder dargestellt sind. Daneben sind auch beliebige andere Hebemittel einsetzbar.

Im Schwenkarm 5 ist über einen Schiebeschlitten 24 ein Kupplungsglied 11 verschiebbar gehalten. Das Kupplungsglied 11 ist zwischen der dargestellten Transportstellung und einer in Richtung A ausgefahrenen Ankuppelstellung verschiebbar. Zu diesem Zweck ist im Schwenkarm 5 ein nicht dargestellter Hydraulikzylinder untergebracht, der mit dem Kupplungsglied 11 in Wirkverbindung steht.

Am heckseitigen Ende 9 des Rahmens 2 ist ein fahrzeugfester Niederhalter 10 vorgesehen, der mit dem im Schwenkarm 5 gehaltenen Kupplungsglied 11 in der dargestellten Transportstellung zusammenwirkt. Dabei übergreift der Niederhalter 10 das Kupplungsglied 11 oberseitig, so dass eine im Kupplungsglied 11 aufgenommene Kuppelöse in der dargestellten Transportstellung sich nicht mehr selbsttätig vom Kupplungsglied 11 lösen kann. Zum Lösen der Kuppelverbindung ist es daher notwendig, den Schwenkarm 5 abzusenken.

Am heckseitigen Ende 9 ist außerdem ein Sicherungsmechanismus 12 vorgesehen, der im Wesentlichen einen Sicherungsbolzen axial verschiebt. Dieser Sicherungsbolzen greift in eine nicht dargestellte Öse des Kupplungsglieds ein, um auf diese Weise ein Verschwenken des Schwenkarms 5 aus der Transportstellung heraus zu verhindern. Durch Zurückziehen dieses Bolzens ist dagegen der Schwenkarm 5 wieder frei schwenkbar.

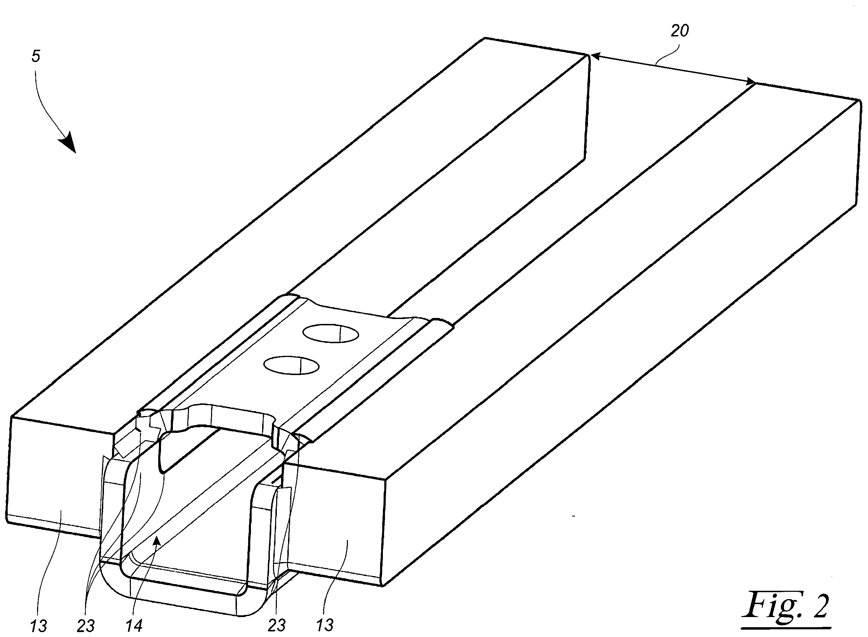

Die Figur 2 zeigt den vorderen Abschnitt des Schwenkarms 5 bei ausgebautem Kupplungsglied. Der Schwenkarm 5 weist zwei als Hohlkörper ausgebildete Seitenwände 13 auf, zwischen denen eine Führung 14 vorgesehen ist. Die Seitenwände 13 müssen auftretende Biegemomente, insbesondere im Bereich des Kupplungsglieds 11 aufnehmen. Aus diesem Grund weisen diese Seitenwände 13 einen relativ großen Querschnitt auf. Um die Wandstärke der Seitenwände 13 reduzieren zu können, ist die Führung 14 in besonderer Weise ausgebildet und mit den Seitenwänden 13 des Schwenkarms 5 verschweißt.

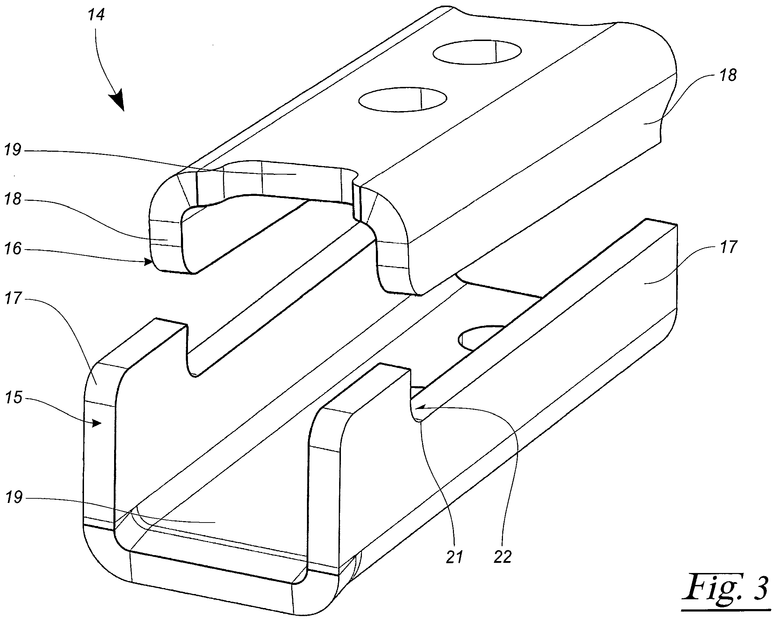

Die weitere Beschreibung der Führung 14 erfolgt anhand der Detaildarstellung gemäß Figur 3. Die Führung 14 besteht aus zwei Profilkörpern 15, 16. Beide Profilkörper 15, 16 sind im Wesentlichen U-förmig ausgebildet und weisen Seitenstege 17, 18 sowie jeweils einen diese verbindenden Quersteg 19 auf. Die Breite der Profilkörper 15, 16 ist dabei derart bemessen, dass sie der lichten Weite 20 zwischen den Seitenwänden 13 des Schwenkarms 5 entspricht.

Der untere Profilkörper 15 ist an seinen Seitenstegen 17 stufenartig ausgebildet, wobei eine Stufe 21 mit einer Rundung 22 versehen ist. Dabei ist der obere Profilkörper 16 passend zum unteren Profilkörper 15 ausgebildet, so dass der obere Profilkörper 16 in die Stufe 21 passt. Die Rundung 22 verringert einerseits die Kerbwirkung und erlaubt andererseits die Anbringung einer durchgängigen Schweißnaht an dieser Stelle.

Die Führung 14 ist mittels Schweißnähten 23 mit den Seitenwänden 13 des Schwenkarms 5 verbunden. Auf diese Weise ergibt sich eine optimale Stabilisierung des Schwenkarms 5, so dass die Seitenwände 13 entsprechend dünnwandig ausgebildet werden können.

### Bezugszeichenliste

- 1: Anhängerkupplung
- 2: Rahmen
- 3: Haltemittel
- 4: Gelenkachse
- 5: Schwenkarm
- 6: Flansch
- 7: Zapfen
- 8: Hebemittel
- 9: heckseitiges Ende
- 10: Niederhalter
- 11: Kupplungsglied
- 12: Sicherungsmechanismus
- 13: Seitenwand
- 14: Führung
- 15: Profilkörper
- 16: Profilkörper
- 17: Seitensteg
- 18: Seitensteg
- 19: Quersteg
- 20: Lichte Weite
- 21: Stufe
- 22: Rundung
- 23: Schweißnaht
- 24: Schiebeschlitten
- A: Richtung

## Patentansprüche

1. Anhängerkupplung für ein Fahrzeug, insbesondere für einen Ackerschlepper, wobei die Anhängerkupplung (1) einen fahrzeugfesten Rahmen (2) aufweist, an dem ein nach hinten gerichteter Schwenkarm (5) zwischen einer abgesenkten Ankuppelstellung und einer angehobenen Transportstellung verschwenkbar gehalten ist, und der Schwenkarm (5) Seitenwände (13) aufweist, an denen mindestens eine Führung (14) abgestützt ist, in der ein Schiebeschlitten (24) verschiebbar abgestützt ist, der ein Kupplungsglied (11) trägt, wobei die mindestens eine Führung (14) mindestens zwei U-förmige Profilkörper (15, 16) aufweist, die Seitenstege (17, 18) und einen diese verbindenden Quersteg (19) aufweisen, wobei die Seitenstege (17, 18) mit den Seitenwänden (13) des Schwenkarms (5) verbunden sind, wobei ein U-förmiger Profilkörper (15) unten angeordnet ist und der andere Profilkörper (16) oben angeordnet ist, wobei der untere Profilkörper (15) länger als der obere Profilkörper (16) ist und die Seitenstege (17, 18) des unteren Profilkörpers (15, 16) stufenartig geformt sind, wobei die Stufe (21) mit einer Rundung (22) versehen ist, **dadurch gekennzeichnet, dass** der obere Profilkörper (16) passend zu dem unteren Profilkörper (15) ausgebildet ist, so dass der obere Profilkörper (16) in die Stufe (21) passt und wobei die Profilkörper (15, 16) miteinander verschweißt sind.

2. Anhängerkupplung nach Anspruch 1, **dadurch gekennzeichnet, dass** die Profilkörper (15, 16) mit den Seitenwänden (13) des Schwenkarms (5) verschweißt sind.

## Claims

1. Trailer coupling for a vehicle, in particular for an agricultural tractor, wherein the trailer coupling (1) has a frame (2) which is fixed to the vehicle and on which a rearwardly directed pivot arm (5) is held so as to be pivotable between a lowered coupling position and a raised transport position, and the pivot arm (5) has side walls (13) on which there is supported at least one guide (14) in which there is displaceably supported a sliding carriage (24) which bears a coupling member (11), wherein the at least one guide (14) has at least two U-shaped profile bodies (15, 16) which have side webs (17, 18) and a transverse web (19) connecting said side webs, wherein the side webs (17, 18) are connected to the side walls (13) of the pivot arm (5), wherein one U-shaped profile body (15) is arranged at the bottom and the other profile body (16) is arranged at the top, wherein the lower profile body (15) is longer than the upper profile body (16) and the side webs (17, 18) of the lower profile body (15, 16) are of stepped form, wherein the step (21) is provided with a rounding (22), **characterized in that** the upper profile body (16) is designed to fit together with the lower profile body (15), such that the upper profile body (16) fits into the step (21), and wherein the profile bodies (15, 16) are welded to one another.

2. Trailer coupling according to Claim 1, **characterized in that** the profile bodies (15, 16) are welded to the side walls (13) of the pivot arm (5).

## Revendications

1. Attelage pour un véhicule, en particulier pour un tracteur agricole, l'attelage (1) présentant un châssis (2) fixé au véhicule, sur lequel est retenu un bras pivotant (5) orienté vers l'arrière, pouvant pivoter entre une position d'attelage abaissée et une position de transport relevée, le bras pivotant (5) présentant des parois latérales (13) sur lesquelles est supporté au moins un guide (14) dans lequel un chariot coulissant (24) est supporté de manière à pouvoir coulisser, lequel porte un organe d'accouplement (11), l'au moins un guide (14) présentant au moins deux corps profilés en forme de U (15, 16), qui présentent des nervures latérales (17, 18) et une nervure transversale (19) reliant celles-ci, les nervures latérales (17, 18) étant connectées aux parois latérales (13) du bras pivotant (5), un corps profilé en forme de U (15) étant disposé en bas et l'autre corps profilé (16) étant disposé en haut, le corps profilé inférieur (15) étant plus long que le corps profilé supérieur (16) et les nervures latérales (17, 18) du corps profilé inférieur (15, 16) étant formées de manière étagée, l'étage (21) étant pourvu d'un arrondi (22), **caractérisé en ce que** le corps profilé supérieur (16) est réalisé de manière adaptée au corps profilé inférieur (15) de telle sorte que le corps profilé supérieur (16) s'ajuste dans l'étage (21) et les corps profilés (15, 16) étant soudés l'un à l'autre.

2. Attelage selon la revendication 1, **caractérisé en ce que** les corps profilés (15, 16) sont soudés aux parois latérales (13) du bras pivotant (5).
